**Europäisches Patentamt**

**European Patent Office**

**Office européen des brevets**

(19)

(11) Veröffentlichungsnummer: **0 114 030**
**B1**

(12) ## EUROPÄISCHE PATENTSCHRIFT

(45) Veröffentlichungstag der Patentschrift:
21.06.89

(21) Anmeldenummer: **83810585.6**

(22) Anmeldetag: **14.12.83**

(51) Int. Cl.⁴: **G 01 N 21/59**

(54) **Transmissionsdensitometer.**

(30) Priorität: **20.12.82 CH 7429/82**

(43) Veröffentlichungstag der Anmeldung:
**25.07.84 Patentblatt 84/30**

(45) Bekanntmachung des Hinweises auf die Patenterteilung:
**21.06.89 Patentblatt 89/25**

(84) Benannte Vertragsstaaten:
**AT CH DE FR GB IT LI NL**

(56) Entgegenhaltungen:
**GB-A-690 169**
**US-A-3 771 877**
**US-A-4 071 299**
**US-A-4 264 210**

(73) Patentinhaber: **GRETAG Aktiengesellschaft,
Althardstrasse 70, CH- 8105 Regensdorf (CH)**

(72) Erfinder: **Celio, Tino, Dr., CH- 6775 Ambri (CH)**
Erfinder: **Mast, Fred, Dr., Fürstenlandstrasse 15,
CH- 9500 Wil (CH)**
Erfinder: **Weidmann, Markus, Ringstrasse 27, CH-
8172 Niederglatt (CH)**

(74) Vertreter: **Pirner, Wilhelm, Patentabteilung der
CIBA- GEIGY AG Postfach, CH- 4002 Basel (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 114 030 B1

## Beschreibung

Die Erfindung betrifft ein Transmissionsdensitometer.

Solche Densitometer sind üblicherweise mit einem Satz verschiedener, auf den jeweiligen Anwendungsfall abgestimmter Messköpfe ausgestattet, die dann nach Bedarf eingesetzt werden können. Bei den bisher bekannten auswechselbaren Messköpfen dieser Art befinden sich sowohl optische als auch elektrische Komponenten (Fotoempfänger, Verstärker) im Messkopf, wobei relativ aufwendige und insbesondere umständlich handzuhabende Verbindungskonstruktionen zwischen Messkopf und Messarm unumgänglich sind.

In US-A-4 071 299 ist eine andere Art von Transmissionsdensitometer beschrieben. Dieses weist einen an einer Konsole starr befestigten, über eine Auflagefläche ragenden Messarm auf, an dessen freiem Ende ein Messkopf teleskopartig auf- und abbewegbar angeordnet ist. Im Messkopf selbst befinden sich optische Komponenten, welche das empfangene Licht auf einen im Messarm angeordneten Photomultiplier richten. Der Messkopf ist nicht auswechselbar.

Durch die Erfindung sollen nun die Voraussetzungen dafür geschaffen werden, dass der Messkopf bei einem Transmissionsdensitometer der zur Rede stehenden Art auf konstruktiv und bezüglich Handhabung einfachste Weise am Messarm befestigt bzw. ausgewechselt werden kann. Gleichzeitig soll der Messkopf hinsichtlich Lichtausbeute verbessert werden.

Das erfindungsgemässe Transmissionsdensitometer, das diesen Anforderungen genügt, ist im Patentanspruch 1 beschrieben. Bevorzugte und besonders zweckmässige Ausgestaltungen ergeben sich aus den abhängigen Ansprüchen.

Gemäss dem Hauptaspekt der Erfindung enthält also der Messkopf nur optische Komponenten, nicht jedoch den Fotoempfänger und den zugehörigen Verstärker etc. Dadurch entfallen alle elektrischen Steckverbindungen, und die mechanische Verbindung von Messkopf und Messarm kann dadurch sehr einfach gestaltet werden.

Gemäss einer in der Densitometrie allgemein anerkannten Norm (American Standard for Diffuse Transmission Density, A.S.A. Z38.2.5 : 1946) hat die Beleuchtung des Messobjekts mit gerichtetem Licht zu erfolgen, während das vom Messobjekt durchgelassene und schliesslich gemessene Licht ungerichtet bzw. diffus sein soll. Aus diesem Grunde enthalten die Messköpfe von Transmissionsdensitometern normalerweise stets einen eine Streuung des empfangenen Lichts bewirkenden Diffusor.

Bisher werden als Diffusor ausschliesslich gemeinhin als Streuscheiben bezeichnete Elemente mit gerauhten Oberflächen verwendet. Solche Streuscheiben haben jedoch erfahrungsgemäss den Nachteil, dass sie einen erheblichen Teil des sie beaufschlagenden Lichts auf das Messobjekt zurückstreuen und dadurch zu unerwünschten Verfälschungen des Messergebnisses führen. Insbesondere macht sich dieser Effekt bemerkbar bei Messobjekten mit spiegelnden Oberflächen, wie sie beispielsweise bei für Eichzwecke benötigten Mess-Standards vorhanden sind. Es leuchtet ein, dass solche Messwertverfälschungen gerade bei der Ausmessung von solchen Mess-Standards besonders störend sind.

Gemäss einem weiteren wichtigen Aspekt der Erfindung werden diese Probleme nun dadurch vermieden, dass als Diffusor nicht eine Streuscheibe sondern ein das empfangene Licht an seinen Seitenwänden reflektierender Lichtleiter verwendet wird. Durch die Verwendung eines Lichtleiters als Diffusor - es kann sich dabei sowohl um einen verspiegelten Hohlleiter als auch, und zwar bevorzugt, um einen einfachen Glasstab oder dgl. mit optisch glatter Lichteintrittsfläche handeln - wird nicht nur die unerwünschte Rückstreuung des Messlichts auf das Messobjekt praktisch vollständig vermieden, sondern gleichzeitig auch eine höhere Lichtausbeute erreicht, d. h., das Licht wird auf seinem Weg vom Messobjekt zum Fotoempfänger weniger gedämpft.

Im folgenden wird die Erfindung anhand der Zeichnung näher erläutert, Es zeigen:

Fig. 1   eine Seitenansicht eines erfindungsgemässen Transmissionsdensitometers,
Fig. 2   einen Schnitt durch den Messkopf des Densitometers in vergrösserter Darstellung nach der Linie II - II der Fig. 1 und
Fig. 3 und 4 zwei Detailvarianten.

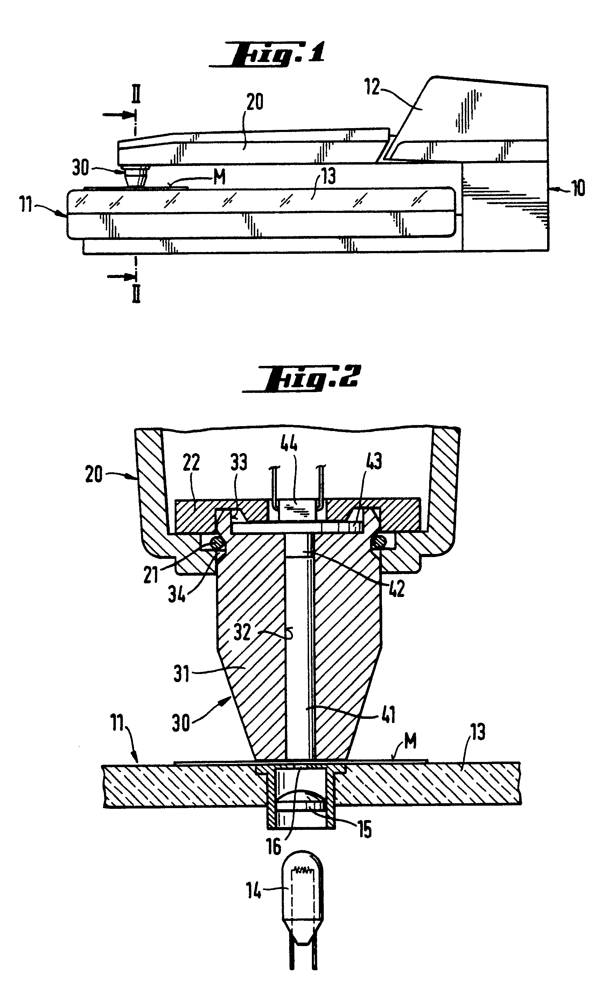

Das dargestellte Transmissionsdensitometer umfasst gemäss Fig. 1 ein aus einem Beleuchtungstisch 11 und einer Konsole 12 bestehendes Gestell 10 und einen auf- und abschwenkbar an der Konsole 12 angelenkten Messarm 20 mit einem an seinem freien Ende befestigten Messkopf 30.

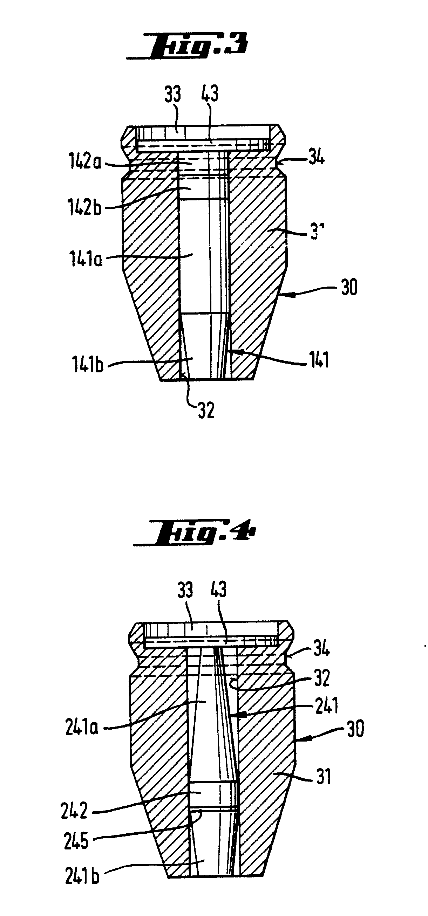

Der Beleuchtungstisch 11 besitzt eine durchscheinende, milchglasartige, als Unterlage für das Messobjekt dienende Abdeckung 13 und enthält einige Lichtquellen zur Ausleuchtung des Messobjekts M. Ausserdem befinden sich im Beleuchtungstisch 11 eine Lampe 14 und eine Beleuchtungsoptik 15 zur Beaufschlagung des Messobjekts M mit gerichtetem Messlicht. Die Grösse des beleuchteten Messflecks ist dabei durch eine in der Abdeckung 13 bündig mit deren Oberfläche gehaltene Messblende 16 definiert (Fig. 2).

Das im Bereich des Messflecks bzw. der Messblende 16 vom Messobjekt M durchgelassene Licht wird nun vom Messkopf 30 gesammelt und auf einen im Messarm 20 enthaltenen Fotoempfänger geführt, der es in ein entsprechendes elektrisches Signal umsetzt. Dieses wird dann mittels einer teils im Messarm teils in der Konsole angeordneten elektronischen Schaltung in üblicher Weise verarbeitet und zur Anzeige gebracht.

Soweit entspricht das dargestellte Densitometer im Prinzip dem Stand der Technik. Die im folgenden näher beschriebenen Unterschiede diesem gegenüber bestehen vor allem im optischen und mechanischen Aufbau des Messkopfs, also der zur Sammlung des Messlichts und Beaufschlagung des Fotoempfängers mit demselben notwendigen Teile.

Der Messkopf 30 (Fig. 2) besteht aus einem im oberen Teil im wesentlichen zylindrischen und im unteren Teil konisch zusammenlaufenden Metallkörper 31 mit einer axialen, durchgehenden Bohrung 32 und einer flachen zylindrischen Ausnehmung 33 an der oberen Stirnseite. In der Bohrung 32 befinden sich hintereinander ein zylindrischer Lichtleiter in Form eines Glasstabs 41 mit optisch glatten Stirnflächen und ein ebenfalls zylindrisches Infrarotfilter 42. Die Längen von Glasstab 41 und IR-Filter 42 entsprechen genau der länge der Bohrung 31, so dass also die untere Stirnfläche des Glasstabs mit der unteren Stirnfläche des Körpers 31 und die obere Stirnfläche des IR-Filters 42 mit dem Boden der Ausnehmung 33 fluchten. In der Ausnehmung 33 liegen ein oder mehrere scheibenförmige Abgleichfilter 43, welche der Messanordnung die gewünschte Charakteristik verleihen.

Glasstab 41 und IR-Filter 42 sind im wesentlichen fest im Körper 31 angeordnet, die Abgleichfilter 43 dagegen liegen nur lose in der Ausnehmung, so dass sie bei Bedarf leicht ausgewechselt werden können. Der Glasstab kann aussen verspiegelt sein. Falls die Totalreflexion an seinen Seitenwänden ausgenutzt werden soll, muss er im wesentlichen berührungsfrei im Metallkörper gehalten sein.

Der Messkopf 30 ist im Messarm 20 mittels eines Steck-Rastverschlusses leicht auswechselbar befestigt. Der Rastverschluss besteht in an sich bekannter Weise aus zwei im Messarm 20 beweglich angeordneten Federn 21, welche in eine keilförmige Ringnut 34 am oberen Umfang des Körpers 31 eingreifen und diesen dadurch federnd festhalten.

Der Fotoempfänger 44 ist nicht im Messkopf 30 angeordnet, sondern in einer Trägerplatte 22 im Messarm 20. Die Anordnung ist dabei so getroffen, dass der Fotoempfänger 44 bei eingestecktem Messkopf 30 in dessen Achse liegt und zwischen ihm und den Abgleichfiltern 43 praktisch kein Zwischenraum verbleibt.

Die Anordnung des Fotoempfängers 44 im Messarm statt wie bisher üblich im Messkopf hat den Vorteil, dass die sonst notwendigen elektrischen Steckverbindungen komplett wegfallen und die Verbindung von Messkopf und Messarm mechanisch sehr einfach gestaltet werden kann. Durch den rotationssymmetrischen Aufbau der optischen Anordnung und der Steck-Rast-Verbindung kann der Messkopf in jeder beliebigen Drehstellung befestigt werden, was die Handhabung beim Auswechseln wesentlich vereinfacht und erleichtert.

Das vom Messobjekt M ausgehende Messlicht wird dem Fotoempfänger 44 über den als Lichtleiter wirkenden Glasstab 41 und nicht wie bisher üblich über eine Streuscheibe oder dergleichen zugeführt. Bei geeigneter Abstimmung von Brechungskoeffizient, Länge und Durchmesser des Glasstabs ergibt sich aufgrund der Mehrfachreflexionen an den seitlichen Grenzflächen des Glasstabs eine mindestens ebenso gute Streuwirkung wie bei Verwendung einer Streuscheibe mit gerauhter Oberfläche. Im Unterschied zu letzterer werden jedoch unerwünschte Rückstreuungen auf das Messobjekt vermieden und ausserdem eine höhere Lichtausbeute erzielt.

Als Material für den lichtleitenden Glasstab kommt gewöhnliches optisches Glas oder Quarzglas in Frage. Günstige Verhältnisse von Länge und Durchmesser des Glasstabs liegen im Bereich von 4 - 5 bis 8 - 10.

Selbstverständlich könnte anstelle des Glasstabs 41 auch ein Hohlleiter mit verspiegelten Innenwänden (Spiegelschacht) Verwendung finden. Herstellungstechnisch ist jedoch ein Glasstab am einfachsten zu realisieren.

Der Querschnitt des Glasstabs ist mit Vorzug der Fläche des Fotoempfängers angepasst, so dass dieser mit dem gesamten Messlicht beaufschlagt wird. Im übrigen muss der Glasstab bzw. Lichtleiter nicht unbedingt zylindrisch sein, sondern kann natürlich auch andere, z. B. konische Formen, aufweisen. Ferner kann der Glasstab z. B. auch an seinem unteren Ende einen runden Querschnitt aufweisen und nach oben hin in einen dem Fotoempfänger angepassten Querschnitt übergehen.

Weitere zweckmässige Ausführungsformen für den Lichtleiter ergeben sich aus den Fig. 3 und 4.

Gemäss Fig. 3 besteht der Lichtleiter 141 aus einem zylindrischen Teil 141a und einem kegelstumpfförmigen Teil 141b, welch letzterer dem Messobjekt zugewandt ist. An den zylindrischen Teil 141a schliessen ein UV-Filter 142b und ein JR-Filter 142a an. Anstatt des konischen Teils könnte auch pyramidenstumpfförmiger, sphärischer oder asphärischer Teil vorgesehen sein. Die Bohrung des Körpers 31 des Messkopfs 30 ist natürlich an die Form des Lichtleiters 141 angepasst.

Der Lichtleiter gemäss Fig. 3 bzw. der damit ausgestattete Messkopf ist besonders für die Messung von lichtstreuenden Filmen geeignet, infolge Wegfalls einer Streuscheibe ergibt sich gegenüber mit Streuscheiben ausgerüsteten Messköpfen ein Lichtgewinn um rund den Faktor 10. Im unteren (konischen) Teil 141b des Lichtleiters ergibt sich eine Aufteilung von flach eintretenden Lichtstrahlen und damit eine Reduktion von Lichtintensitätsänderungen infolge Einfallswinkelschwankungen bei den Filtern.

Bei der Ausführungsform gemäss Fig. 4 ist der Lichtleiter 241 ebenfalls zweiteilig und umfasst zwei gegengleich kegelstumpfförmige Teile 241a und 242b. Zwischen den beiden einander mit ihren Basisflächen zugewandten Teilen sind ein IR-Filter 242 und eine - allerdings nur schwach wirkende - Streuscheibe 245 angeordnet. Die kleinere Deckfläche des oberen Lichtleiterteils 241a ist der Fläche des Fotodetektors angepasst. Anstatt konisch könnten die beiden Lichtleiterteile auch pyramidenstumpfförmig, sphärisch oder asphärisch ausgebildet sein.

**Patentansprüche**

1. Transmissionsdensitometer mit einem Beleuchtungstisch (11) für ein Messobjekt (M), einer Konsole (12) und einem daran auf- und abschwenkbar angelenkten Messarm (2), einem am freien Ende des Messarms auswechselbar befestigbaren Messkopf (30) sowie einer an den Messkopf angeschlossenen Mess- und Auswertungsvorrichtung, wobei der auswechselbare Messkopf (30) die zur Erfassung des vom Messobjekt (M) durchgelassenen Lichts und zur Weiterleitung desselben an einen Fotoempfänger (44) erforderlichen optischen Komponenten (41, 42, 43) nicht aber Komponenten, die elektrische Steckverbindungen erfordern, enthält, der Fotoempfänger (44) stationär im Messarm (20) angeordnet ist, und der Messkopf (30) mittels eines Schnellverschlusses am Messarm befestigt ist.

2. Densitometer nach Anspruch 1, dadurch gekennzeichnet, dass der Messkopf (30) bezüglich des Strahlengangs der in ihm enthaltenen optischen Komponenten (41 - 43) und bezüglich seiner Verbindung mit dem Messarm (20) rotationssymmetrisch ausgebildet ist.

3. Densitometer nach Anspruch 1 oder 2, dadurch gekennzeichnet, dass der Schnellverschluss eine federnde Rasthalterung (21) ist.

4. Densitometer nach Anspruch 3, dadurch gekennzeichnet, dass der Messkopf (30) in seinem oberen Gehäuseteil mit einer umlaufenden Keilnut 34 versehen i)t, in die bei am Messarm (20) befestigten Messkopf zwei oder mehrere am Messarm (20) befestigte Federn eingreifen und den Messkopf dadurch festhalten.

5. Densitometer nach einem der Ansprüche 1 - 4, dadurch gekennzeichnet, dass die optischen Komponenten zur Beaufschlagung des Fotoempfängers (44) mit Messlicht einen an seinen Seitenwänden reflektierenden, eine Streuung des empfangenen Lichtsbewirkenden Lichtleiter (41) umfassen.

6. Densitometer nach Anspruch 5, dadurch gekennzeichnet, dass der Lichtleiter ein im wesentlichen zylindrischer oder prismatischer Stab (41) aus einem in der Masse im wesentlichen nicht streuenden Material, vorzugsweise Glas, ist.

7. Densitometer nach Anspruch 5, dadurch gekennzeichnet, dass der Lichtleiter (141, 241) zwei Abschnitte (141a, 141b; 241a, 241b) aufweist, von denen wenigstens der eine, dem Messobjekt zugewandte (141b, 241b) sich in Richtung auf das Messobjekt hin verjüngend ausgebildet ist.

8. Densitometer nach Anspruch 6 oder 7, dadurch gekennzeichnet, dass die optischen Komponenten zusätzlich zum Lichtleiter ein Infrarotfilter (42) und wenigstens ein Farbabgleichfilter (43) umfassen.

9. Densitometer nach Anspruch 8, dadurch gekennzeichnet, dass das Infrarotfilter (42) zusammen mit dem Lichtleiter (41) im wesentlichen fix im Messkopf (30) angeordnet ist.

10. Densitometer nach Anspruch 8 oder 9, dadurch gekennzeichnet, dass das Abgleichfilter (43) leicht auswechselbar in einer dem Fotoempfänger (44) zugewandten Ausnehmung (33) des Messkopfs (30 gehaltert ist.

**Claims**

1. A transmission densitometer comprising an exposure table (11) for an object (M) to be measured, a bracket (12) and a measuring arm (2) which is articulated thereto so as to be pivotable upwards and downwards, a measuring head (30) which can be attached to the free end of the measuring arm so as to be interchangeable, and a measuring and evaluation device connected to the measuring head, the interchangeable measuring head (30) containing the optical components (41, 42, 43) which are necessary to detect the light transmitted by the object (M) to be measured and to transmit said light to a photoreceiver (44), but not components which require plug-in electrical connections, the photoreceiver (44) being arranged stationary in the measuring arm (20), and the measuring head (30) being attached to the measuring arm by means of a quick-connection means.

2. A densitometer according to Claim 1, characterised in that the measuring head (30) is rotationally symmetrical with respect to the path of light of the optical components (41 - 43) contained therein and with respect to its connection to the measuring arm (20).

3. A densitometer according to Claim 1 or 2, characterised in that the quick-connection means is a spring lock (21).

4. A densitometer according to Claim 3, characterised in that the measuring head (30) is provided in its upper housing section with a circumferential wedge-shaped groove (34) into which, when the measuring head is attached to the measuring arm (20), two or more springs attached to the measuring arm (20) engage and thereby secure the measuring head.

5. A densitometer according to one of claims 1 - 4, characterised in that the optical components for subjecting the photoreceiver (44) to measuring light comprise a light conductor (41) which effects scattering of the received light and reflects on its side walls.

6. A densitometer according to Claim 5, characterised in that the light conductor is a substantially cylindrical or prismatic rod (41) made of a material which is substantially non-scattering in the mass, preferably glass.

7. A densitometer according to Claim 5, characterised in that the light conductor (141, 241) has two sections (141a, 141b; 241a, 241b), of which at least the one (141b; 241b) facing the object to be measured is tapered towards the object to be measured.

8. A densitometer according to Claim 6 or 7, characterised in that the optical components include in addition to the light conductor an infra-red filter (42) and at least one colour balancing filter (43).

9. A densitometer according to Claim 8, characterised in that the infra-red filter (42) together with the light conductor (41) is substantially fixedly mounted in the measuring head (30).

10. A densitometer according to Claim 8 or 9, characterized in that the balancing filter (43) is held in a recess (33) in the measuring head (30) which faces the photoreceiver (44) so as to be easily interchangeable.


**Revendications**

1. Densitomètre à transmission, comportant une table (11) d'éclairage d'un objet (M) à mesurer, une console (12) et un bras (20) de mesure, qui y est articulé et peut être relevé et abaissé, une tête (30) de mesure, qui est fixée amoviblement à l'extrémité libre de ce bras, ainsi qu'un dispositif de mesure et d'analyse de cette dernière, associé à cette tête, densitomètre dans lequel la tête de mesure, remplaçable, contient les composants optiques (41, 42, 43) nécessaires pour recueillir la lumière que l'objet (M) à mesurer a laissée passer et pour la transmettre à un photorécepteur (44), mais non des composants exigeant des connexions électriques à broches, ce photorécepteur (44) étant monté fixe et à demeure dans le bras (20) de mesure et la tête (30) de mesure étant fixée à ce bras au moyen d'une fixation rapide.

2. Densitomètre selon la revendication 1, caractérisé en ce que la tête (30) de mesure a une symétrie de rotation par rapport au trajet des rayons des composants optiques (41 - 43) qu'elle contient et par rapport à sa liaison avec le bras (20) de mesure.

3. Densitomètre selon la revendication 1 ou 2, caractérisé en ce que la fixation rapide est une fixation (21) élastique dans une gorge.

4. Densitomètre selon la revendication 3, caractérise en ce que la partie supérieure de la tête (30) comporte une gorge périphérique (34) cunéiforme, dans laquelle s'engagent, lorsque cette tête est fixée au bras (20) de mesure, deux ou plus de ceux ressorts, qui sont fixés à ce bras (20), ce qui retient cette tête.

5. Densitomètre selon l'une des revendications 1 à 4, caractérisé en ce que les composants optiques destinés à éclairer le photorécepteur (44) avec de la lumière de mesure, comprennent un conducteur (41) de lumière, à parois latérales réfléchissantes, et qui provoque une diffusion de la lumière reçue.

6. Densitomètre selon la revendication 5, caractérisé en ce que le conducteur de lumière est un barreau (41), sensiblement cylindrique ou prismatique, en une matière essentiellement non diffusante dans la masse, avantageusement du verre.

7. Densitomètre selon la revendication 5, caractérisé en ce que le conducteur (141, 241) de lumière comporte deux parties (14la, 141b, 24la, 241b), dont l'une au moins (141b ; 241b), adjacente à l'objet à mesurer, s'amincit dans la direction de cet objet.

8. Densitomètre selon la revendication 6 ou 7, caractérisé en ce que les composants optiques comprennent, en plus du conducteur de la lumière, un filtre (42) pour infrarouge et au moins un filtre (43) d'équilibrage des couleurs.

9. Densitomètre selon la revendication 8, caractérisé en ce que le filtre (42) pour infrarouge et le conducteur (41) de lumière sont rendus pratiquement solidaires de la tête (30) de mesure.

10. Densitomètre selon la revendication 8 ou 9, caractérisé en ce que le filtre (43) d'équilibrage est logé, de manière à être aisément interchangeable, dans un évidement (33) de la tête (30) de mesure, adjacent au photorécepteur (44).

Fig.1

Fig.2

## Fig. 3

## Fig. 4